Europäisches Patentamt

European Patent Office

Office européen des brevets

(11) Veröffentlichungsnummer: **0 069 240**
**B1**

(12) **EUROPÄISCHE PATENTSCHRIFT**

(45) Veröffentlichungstag der Patentschrift:
**23.04.86**

(21) Anmeldenummer: **82105056.4**

(22) Anmeldetag: **09.06.82**

(51) Int. Cl.⁴: **B 01 D 35/14,** B 01 D 27/10

(54) Armatur mit einer Vorrichtung zum Behandeln eines durch eine Leitung strömenden Mediums.

(30) Priorität: **04.07.81 DE 3126507**

(43) Veröffentlichungstag der Anmeldung:
**12.01.83 Patentblatt 83/2**

(45) Bekanntmachung des Hinweises auf die Patenterteilung:
**23.04.86 Patentblatt 86/17**

(84) Benannte Vertragsstaaten:
**AT BE CH FR GB IT LI LU NL SE**

(56) Entgegenhaltungen:
**GB - A - 1 070 029
US - A - 2 544 244
US - A - 2 945 591
US - A - 3 715 032
US - A - 3 935 106
US - A - 4 077 876
US - A - 4 082 673**

(73) Patentinhaber: **Surculus AG, 36, Städele, Vaduz (LI)**

(72) Erfinder: **Selz, Alois, Karlstrasse 25, D-7800 Freiburg (DE)**

(74) Vertreter: **Schmitt, Hans, Dipl.-Ing. et al, Dreikönigstrasse 13, D-7800 Freiburg (DE)**

ACTORUM AG

## Beschreibung

Die Erfindung betrifft eine Armatur mit einer Vorrichtung zum Reinigen, Messen und/oder Untersuchen od.dgl. von einem durch eine Leitung strömenden Medium mit einem die Vorrichtung – z.B. ein Filter, insbesondere als Einbauteil – auswechselbar enthaltenden, an die Rohrleitung angeschlossenen Gehäuse, an dessen Ein- und Ausgang zu dem Einbauteil ein den Ein- und Ausgang verschliessendes, im Rohrverlauf befindliches Absperrorgan angeordnet ist, welches das Medium in Offenstellung durch die Vorrichtung leitet und in Schliessstellung Ein- und Austritte der gesamten Armatur und damit die Rohrleitung selbst beidseitig der Vorrichtung sperrt, wobei das Absperrorgan eine verstellbare Sperre enthält, die zwei voneinander getrennte Ein- und Austritte aufweist, wobei jeweils ein Eintritt und der dazugehörige Austritt der Sperre die Rohrleitung mit dem Einbauteil, insbesondere zwei verschiedene Seiten des Einbauteiles, verbindet und wobei die Sperre Dichtflächen und/oder Gegendichtungen im Armaturengehäuse aufweist, an denen sie zumindest in Schliessstellung jeweils anliegt. Derartige Armaturen sind aus der US-A-3 935 108 und der US-A-4 082 673 bekannt. Dabei dienen als Absperrorgane mit Sperren etwa zylindrische Körper, die an ihrem Eintritt eine Aussparung zum Umlenken des Mediums von dem Eintritt in die Armatur zu dem Einbauteil haben. Der Austritt wird von einem schrägen oder winkelförmigen Kanal gebildet, der seitlich des Eintrittes angeordnet ist.

Vor allem die Aussparungen am Eintritt, die seitlich offene Kammern sind und für ein Verschliessen der Armatur aus dem Bereich des Eintrittes der Armatur verdreht werden müssen, lassen aufgrund ihrer unmittelbar zu dem Einbauteil gerichteten Öffnung keine rings um diesen Eintritt verlaufende Dichtung zu. Dies kann vor allem bei grossen Drücken und gegebenenfalls bei aggressiven Medien zu Schwierigkeiten führen.

Es besteht deshalb die Aufgabe, eine Armatur der eingangs erwähnten Art zu schaffen, die einen vergleichsweise geringen konstruktiven und Montageaufwand erfordert, das Austreten von Medium beim Auswechseln des Einbauteiles und verschlossenem Absperrorgan vermeidet und auch bei grossen Drücken und aggressiven Medien eine sichere Abdichtung sowohl des geöffneten als auch des geschlossenen Absperrorganes ermöglicht.

Eine Lösung dieser Aufgabe besteht darin, dass als Sperre eine um eine quer zur Rohrleitung liegende Achse drehbare Kugel vorgesehen ist, an welcher von einem Eintritt über eine Krümmung ein Austritt zu dem Einbauteil gerichtet ist, während über eine Zwischenwand von diesem Austritt getrennt ein weiterer Eintritt in die Kugel vorgesehen ist, der getrennt von dem ersten Eintritt zu einem weiteren Austritt in der Kugelleitung führt, dass der von der Rohrleitung kommende Eintritt in die Kugel mit deren Austritt in die Rohrleitung fluchtet und dass Ein- und Austritt zu dem Einbauteil etwa rechtwinklig und vorzugsweise in Fortsetzung zu einer Betätigungswelle für die Kugel liegen, wobei die eine Öffnung der Kugel als Verbindung mit dem Einbauteil etwa zentral angeordnet ist, während die andere Öffnung diese erste Öffnung ringförmig umgibt und wobei am Übergang zwischen Kugel und dem diese enthaltenden Gehäuse Dichtringe angeordnet sind.

Auf diese Weise können die Vorteile einer Verschlusskugel ausgenutzt und somit die Armatur platzsparend in der Grösse eines Kugelventiles ausgebildet werden. Darüber hinaus lassen sich auch im Bereich des Eintrittes in die Kugel diesen Eintritt vollständig umschliessende Dichtringe mit einer entsprechend guten Abdichtwirkung anordnen. Dennoch erlaubt diese Kugel gleichzeitig eine sichere Abzweigung und Rückführung des Mediums durch die spezielle Anordnung der Kanäle im Inneren der Kugel, die sich an einer Stelle durchdringen und an der dem Einbauteil zugewandten Öffnung konzentrisch umgeben. Dadurch wird die gesamte Kugeloberfläche nur an geringst möglichen Stellen von Kanälen durchsetzt und kann entsprechend gut abgedichtet werden.

Zum Schliessen der Armatur kann dabei die Kugel etwa um 90° verdrehbar sein.

Eine andere Lösung der vorerwähnten Aufgabe kann bei einer Armatur der eingangs erwähnten Art darin bestehen, dass als Sperre wenigstens eine Ringmembrane mit einem Verschlusskörper zusammenwirkt, wobei der Eintritt/Austritt in das Einbauteil durch die Ringfläche der von ihrem Sitz abgehobenen Ringmembrane begrenzt ist und der Austritt/Eintritt der Innenöffnung der Membrane entspricht und wobei in Schliessstellung die Ringfläche der Membrane auf dem vorzugsweise ringwulstförmigen Eintritt in die Vorrichtung aufliegt, während der mittlere Durchgang durch den auf der anderen Seite auf der Ringfläche dichtend aufliegenden Verschlusskörper versperrt ist. Dabei werden in vorteilhafter Weise relativ zueinander bewegte Dichtflächen völlig vermieden, was bei bestimmten Durchflussmedien vorteilhaft ist.

Der Verschlusskörper kann seinerseits unterhalb einer Verschlussmembrane angeordnet sein, die eine Verstellspindel und deren Betätigungsmechanismus gegenüber dem Durchflussweg des Mediums innerhalb des Armaturengehäuses abdichtet.

Eine Ausgestaltung der Erfindung, die bei beiden Lösungen vorteilhaft ist, kann darin bestehen, dass das Gehäuse od.dgl. für ein Einbauteil lösbar oder öffenbar an dem Armaturengehäuse befestigt und seine Befestigungsvorrichtung bei geöffnetem Absperrorgan gegen Öffnen oder Lösen gesperrt ist. Dadurch wird vermieden, dass ein Auswechseln des Einbauteiles bei nicht gesperrter Armatur erfolgen kann.

Eine Ausführungsform einer solchen Sicherungssperre sieht vor, dass als Befestigungsvorrichtung Exzenter-Hebelverschlüsse vorgesehen sind, deren freie Betätigungsenden vorzugsweise in Schliessstellung am Armaturengehäuse anliegen und wenigstens teilweise von einem Sperrbügel od.dgl. Sperre gesperrt, insbesondere übergriffen sind, der mit dem Betätigungsgriff od. dgl. des Absperrorganes drehfest verbunden ist und die Verschlüsse nur bei verschlossenem Absperrorgan freigibt. Erst nach dem Betätigen des Absperrorganes in Schliessstellung gibt also diese Sperre die Exzenter-Hebelverschlüsse frei, so dass anschliessend das Gehäuse des Einbauteiles für dessen Auswechseln abgenommen werden kann.

Bei der Lösung mit einer zu dem Absperrorgan gehörenden Ringmembrane kann die Spindel zum Heben und Senken der Membranen einen wenigstens eine Befestigungsschraube des Handrades an ihrem Ansatz für ein Werkzeug durchsetzenden Stift od. dgl. aufweisen, der den Werkzeugangriff nur bei geschlossener Sperre freigibt, und die Befestigungsschrauben für das Gehäuse od. dgl. des Einbauteiles können unter dem Handrad verdeckt angeordnet sein. Auch dadurch ist ein Lösen oder Öffnen des Gehäuses des Einbauteiles nur bei geschlossener Sperre möglich.

Weitere Ausgestaltungen der Erfindung sind Gegenstand weiterer Ansprüche.

Nachstehend ist die Erfindung mit ihren wesentlichen Einzelheiten anhand der Zeichnung noch näher beschrieben. Es zeigt:

Fig. 1 eine erfindungsgemässe Armatur mit einem Filter als Einbauteil im Schnitt gemäss der Schnittlinie I–I in Fig. 3,

Fig. 2 eine Schnittdarstellung der in Fig. 1 gezeigten Armatur gemäss der Schnittlinie II–II in Fig. 3,

Fig. 3 eine Draufsicht einer Armatur in Offenstellung und

Fig. 4 eine Draufsicht einer Armatur gemäss Fig. 3 in Sperr- bzw. Schliessstellung,

Fig. 5 und 6 Querschnitte entsprechend der Schnittlinie V–V in Fig. 1 mit einem als Kugel ausgebildeten Sperrelement in Offen- bzw. Sperrstellung,

Fig. 7 eine Aufsicht eines Anschlusskopfes eines Filtereinsatzes,

Fig. 8 eine gegenüber Fig. 1 und 2 abgewandelt ausgebildete Armatur, die als Sperrorgan Membranen aufweist, im Schnitt gemäss der Schnittlinie VIII–VIII in Fig. 11,

Fig. 9 eine etwa Fig. 8 entsprechende Darstellung, hier jedoch mit in Schliessstellung befindlichem Sperrorgan,

Fig. 10 eine Schnittdarstellung der in Fig. 8 und 9 gezeigten Armatur, jedoch um 90° verdreht, gemäss der Schnittlinie X–X in Fig. 12,

Fig. 11 eine Aufsicht der in den Fig. 8 und 9 gezeigten Armatur bei abgenommenem Handrad und

Fig. 12 eine Aufsicht der in Fig. 10 gezeigten Armatur bei abgenommenem Handrad.

Eine im ganzen mit 1 bezeichnete Armatur dient zum Einbau in ein Rohrsystem, wobei diese Armatur 1 z. B. entsprechende Anschlussflansche 2 und 3 für Rohre aufweist. Die Armatur 1 ist mit einer im ganzen mit 4 bezeichneten Vorrichtung ausgerüstet, die zur Aufnahme von Einbauteilen 5 dient. In den Ausführungsbeispielen sind als Einbauteile Filter 6 vorgesehen, die als sogenannte «Filterkerzen» ausgebildet sind. Gegebenenfalls könnte die Vorrichtung 4 jedoch auch zur Aufnahme von anderen Einbauteilen wie z. B. Temperaturfühlern, Manometern, Düsen zur Beimischung von Komponenten u. dgl. vorgesehen sein.

Die Armatur 1 weist im wesentlichen ein Armaturengehäuse 7 sowie ein Einbauteile-Gehäuse 8 auf.

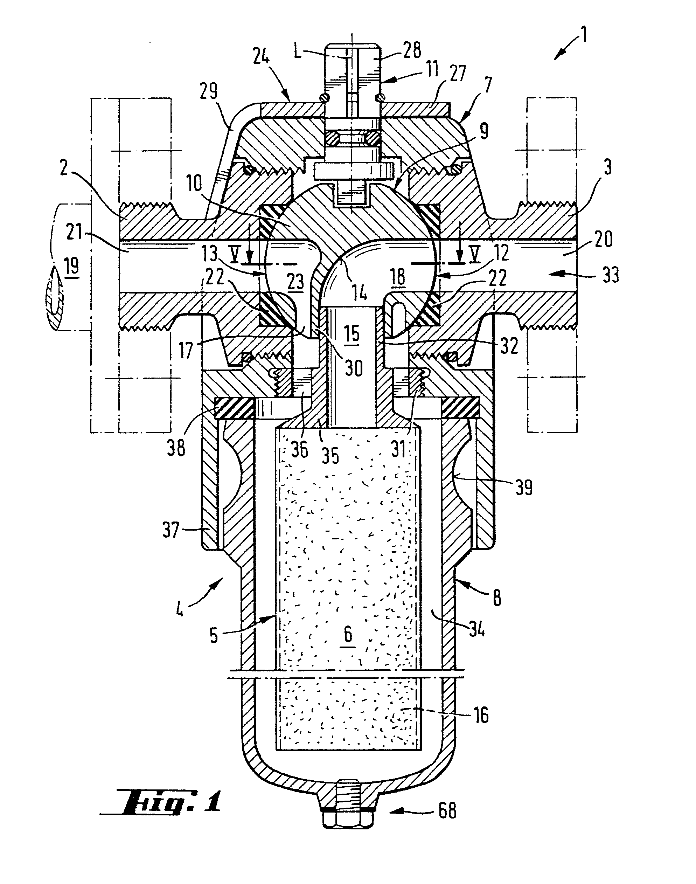

In dem Rohrverlauf zwischen den Anschlussflanschen 2 und 3 befindet sich ein Absperrorgan 9, welches das Medium, insbesondere eine Flüssigkeit, in Offenstellung durch die Armatur hindurchleitet und in Sperrstellung beidseitig gegenüber den Rohranschlüssen abdichtet. Das Absperrorgan 9 weist in den Ausführungsbeispielen gemäss Fig. 1 als Sperre eine verdrehbare Kugel 10 auf, die mit einem im Armaturengehäuse 7 gelagerten Drehantrieb 11 verbunden ist.

Die Kugel 10 weist zwei voneinander getrennte Ein- und Austritte 12 bzw. 13 auf, wobei der Eintritt 12, der dem eingangsseitigen Anschlussflansch 3 zugewandt ist, über eine Krümmung 14 zu einem Austritt 15 führt, der ins Innere des Einbauteile-Gehäuses 8 gerichtet ist. Insbesondere mündet dieser Austritt 15 in den Filter-Innenraum 16. Nach dem Durchströmen des Filters 6 gelangt die Flüssigkeit od. dgl. in das Einbauteile-Gehäuse 8 und von dort in einen weiteren Eintritt 17 der Kugel, der getrennt ist von der Zuleitung 18 innerhalb der Kugel 10 zu dem Filter-Innenraum, und zu dem Austritt 13 in eine Rohrleitung 19 führt.

Für das Verschliessen des Absperrorganes ist die Kugel 10 um eine Achse L quer zum Rohrverlauf verdrehbar gelagert.

Im Übergangsbereich zwischen der Kugel 10 und den angrenzenden Öffnungen der Zuführungsbohrungen 20 einerseits und der Ableitungsbohrung 21 anderseits innerhalb des Armaturengehäuses 7 sind Dichtringe 22 vorgesehen. Beim Verdrehen der Kugel 10 um vorzugsweise 90° um die Drehachse L werden die Zuführungsbohrung 20 und die Ableitungsbohrung 21 durch die Kugelwandung dicht verschlossen. Wie bereits vorerwähnt, sind die Zuführungsbohrung 20 sowie die Ableitungsbohrung 21 und auch die in Offenstellung diesen Bohrungen zugewandten Ein- und Austritte 12 bzw. 13 axial fluchtend angeordnet. Der Austritt 15, der zu dem Einbauteile-Gehäuse 8 hin mündet, ist etwa rechtwinklig zu den vorerwähnten Bohrungen bzw. Öffnungen angeordnet und koaxial zu der Drehachse L.

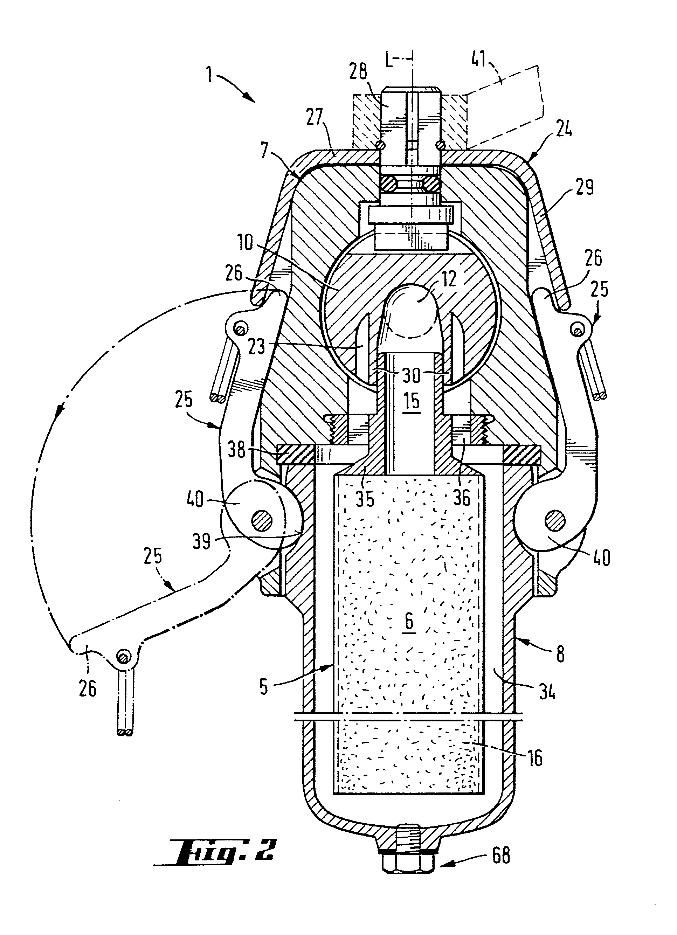

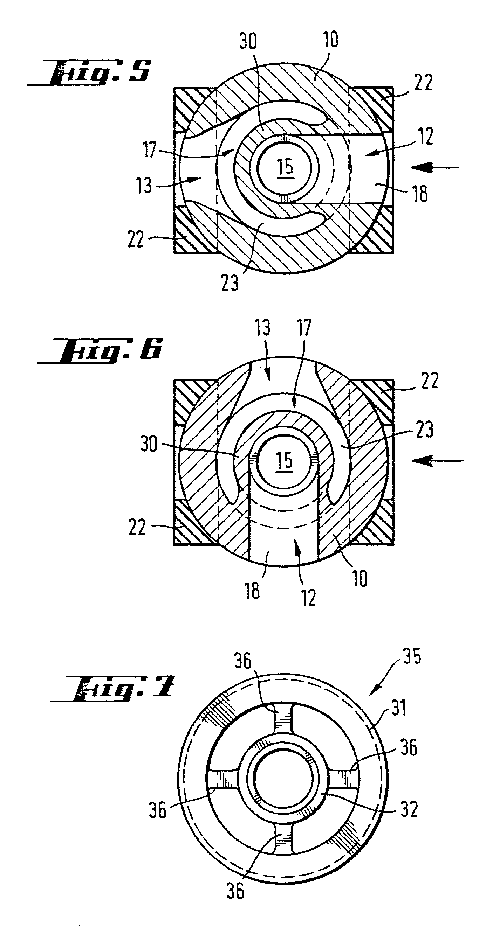

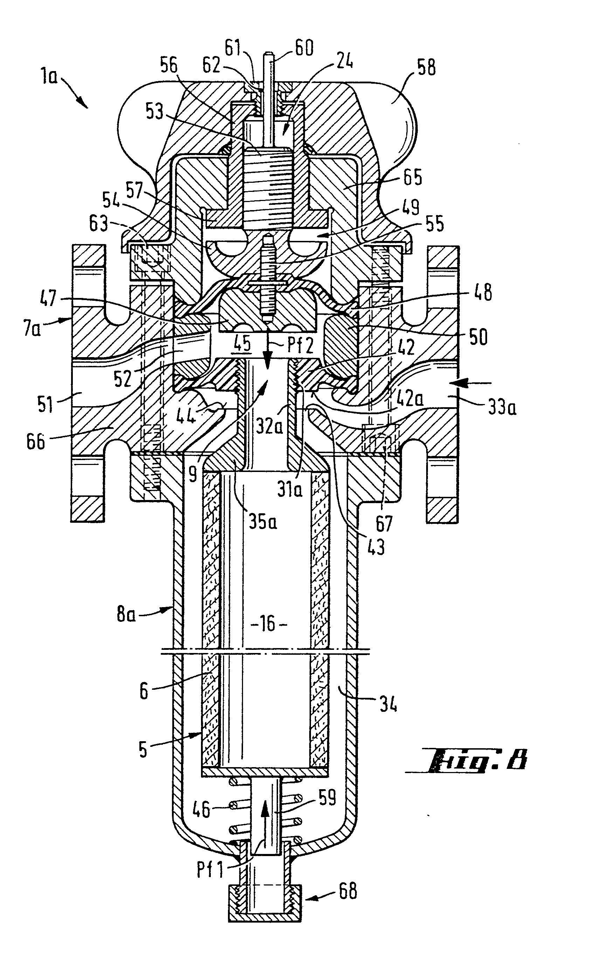

Die Fig. 1 und 2 sowie auch Fig. 5 und 6 lassen erkennen, dass die Zuleitung 18 innerhalb der Kugel 10 einen zentral zur Drehachse L liegenden Austritt 15 und einen seitlichen Eintritt 12 aufweist, so dass insgesamt eine etwa rechtwinklige Durchgangsleitung gebildet ist, während der andere Durchtritt 23 durch die Kugel 10, mit dem Eintritt 17 und dem Austritt 13, diese winkelförmige Zuleitung 18 etwa ringförmig umgibt, wobei dieser Ringraum mit dem durch eine Seitenöffnung gebildeten Austritt 13 verbunden ist.

Das Einbauteile-Gehäuse 8 ist lösbar mit dem Armaturengehäuse 7 verbunden, um das Filter 6 auswechseln zu können. Durch eine Sicherungssperre 24 kann das Lösen des Einbauteile-Gehäuses 8 nur dann erfolgen, wenn sich das Absperrorgan 9 in Sperrstellung (Fig. 6) befindet. Dadurch wird verhindert, dass unbeabsichtigt Flüssigkeit beim Filterwechsel austreten kann.

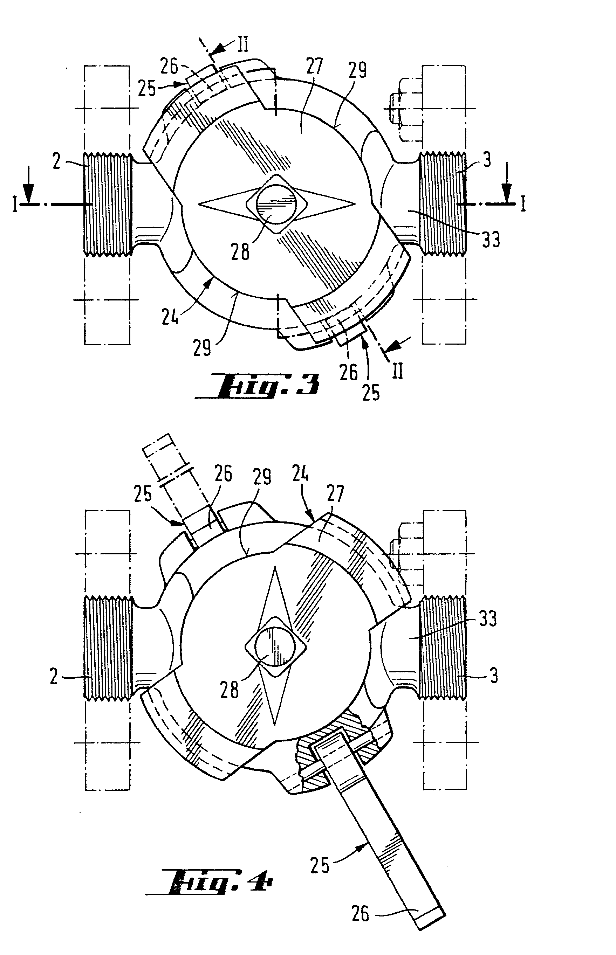

Als Befestigungselemente für das Einbauteile-Gehäuse 8 dienen im Ausführungsbeispiel gemäss Fig. 1 bis 4 Exzenter-Hebelverschlüsse 25, deren freie Betätigungsenden 26 in Sperrstellung der Sicherungssperre 24 von einem Sperrbügel 27 übergriffen werden und dadurch festgelegt sind. Der Sperrbügel 27 ist mit dem Absperrorgan über den eine Antriebswelle 28 aufweisenden Drehantrieb 11 drehfest verbunden. Der Sperrbügel 27 ist dabei so angeordnet bzw. ausgebildet, dass er die Exzenter-Hebelverschlüsse 25 erst nach dem Verdrehen der Kugel 10 in Sperrstellung freigibt. Die Fig. 1 bis 4 lassen erkennen, dass der Sperrbügel 27 etwa topfförmig mit seitlichen Ausschnitten 29 ausgebildet ist, die in Schliessstellung des Absperrorganes 9 im Bereich der freien Betätigungsenden 26 der Exzenter-Hebelverschlüsse 25 zu liegen kommen (vgl. Fig. 4).

Die Zuleitung 18, 12 sowie der um diese etwa ringförmig angeordnete Durchtritt 23 der Kugel 10, wobei diese Durchtrittskanäle durch eine Trennwand 30 voneinander getrennt sind, weisen etwa gleich grosse Durchtrittsquerschnitte auf.

Die Filterkerze 6 ist mit dem Armaturengehäuse 7 durch einen Gewindebund 31 verschraubt. Eine etwa rohrförmige Verlängerung 32 greift in den zentralen Austritt 15 der Kugel 10 ein, wodurch zwischen dem Filter-Innenraum 16 und dem Rohrzulauf 33 eine Verbindung hergestellt ist. Der Aussenraum 34 des Filters 6 ist durch den ringschlitzförmigen Durchtritt 23 mit der Abgangsrohrleitung 19 verbunden. Das Anschlussteil 35 (Fig. 7) der Filterkerze 6 ist zwischen seinem Gewindebund 31 und der rohrförmigen Verlängerung 32 über Stege 36 verbunden, zwischen denen die gefilterte Flüssigkeit od.dgl. hindurchtreten kann und zu dem schlitzförmigen Durchtritt 23 der Kugel 10 gelangt.

Erwähnt sei hierbei, dass die Durchtrittsrichtung eines zu filternden Mediums auch in umgekehrter Richtung erfolgen kann.

Das Einbauteile-Gehäuse 8, das im Ausführungsbeispiel als Filtertopf ausgebildet ist, ist durch die bereits vorerwähnten Exzenter-Hebelverschlüsse 25 mit dem Armaturengehäuse 7 verbunden. Das Gehäuse 8 greift mit seinem Anschlussende in eine ringförmige Anschlussschürze 37 des Armaturengehäuses 7 ein. Es liegt mit seiner Stirnseite gegen eine Ringdichtung 38 aus vergleichsweise weichem Dichtungsmaterial an.

Das Gehäuse 8 weist an seinem in Funktionsstellung innerhalb der Anschlussschürze 37 liegenden Teil eine vorzugsweise umlaufende Aussennut 39 auf, die einen etwa halbkreisförmigen Querschnitt aufweist. In diese Nut 39 können die Exzenter 40 der Exzenter-Hebelverschlüsse 25 in Funktionsstellung eingreifen und das Armaturengehäuse 7 sowie das Einbauteile-Gehäuse 8 miteinander dicht verbinden.

Der mit der Antriebswelle 28 für die Kugel 10 verbundene Sperrbügel 27 bildet gleichzeitig eine Anschlagbegrenzung für die Offen- sowie die Sperrstellung der Kugel 10. Das nach aussen vorstehende Ende der Antriebswelle 28 ist als Vierkant ausgebildet, auf den ein in Fig. 2 strichliniert angedeuteter Hebel 41 zum Verstellen des Drehantriebes 11 aufgesetzt werden kann.

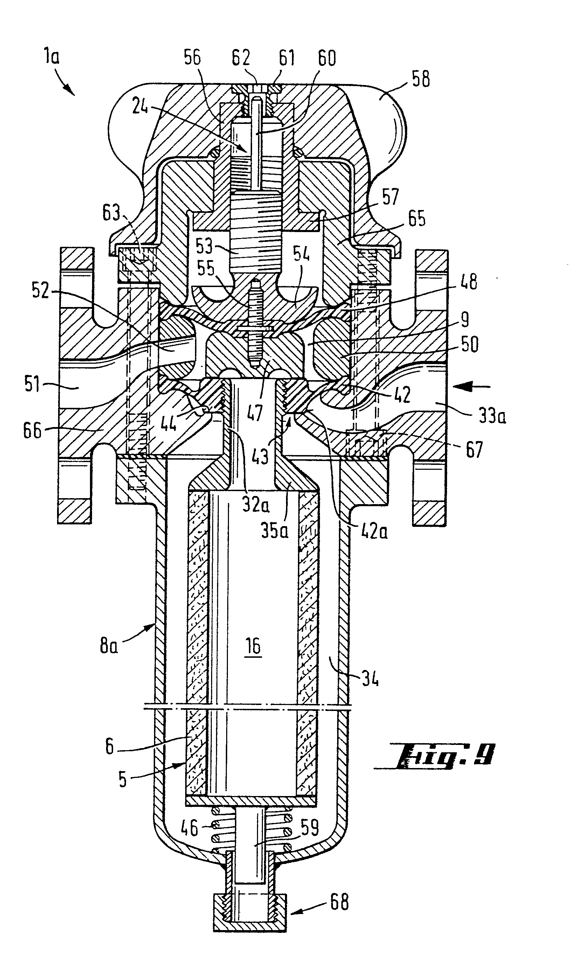

Die Fig. 8, 9 und 11 zeigen ein abgewandeltes Ausführungsbeispiel einer Armatur 1a, bei der als Absperrorgan 9 Membranen vorgesehen sind. Eine Ringmembrane 42 mit wulstförmiger Ringfläche 42a befindet sich dabei in Offenstellung (Fig. 8) mit Abstand benachbart zu ihrem Ventilsitz, der durch einen ringförmigen Eintritt 43 mit Ringfläche 44 zu dem Aussenraum 34 gebildet ist.

Der Filter-Innenraum 16 steht mit einem auf der anderen Seite der Ringmembrane 42 befindlichen und durch diese Membrane abgetrennten Auslassraum 45 in Verbindung. Die Filterkerze 6 ist auch hier mit einem Anschlussteil 35a versehen, das eine etwa zentrale Durchtrittsöffnung der Ringmembrane 42 durchgreift und dort vorzugsweise mittels einer Schraubverbindung mit dieser verbunden ist. Zum Verbinden mit der Ringmembrane 42 weist diese Anschlussteil 35a an seiner Verlängerung 32a ein Aussengewinde 31a auf. Das Filter 6 ist in Richtung des Pfeiles Pf1 mittels einer Feder 46 druckbeaufschlagt und längsverschiebbar gelagert, so dass die Ringmembrane 42 in der in Fig. 8 gezeigten Offenstellung, abgehoben von ihrem Ventilsitz, gehalten wird. Dadurch ist ein Durchtritt durch die Armatur und damit auch durch das Filter 6 möglich. Gegebenenfalls würde auch der Mediendruck alleine zum Offenhalten der Ringmembrane 42 genügen.

Die Ringmembrane 42 arbeitet mit einem Verschlusskörper 47 zusammen, der aus der in Fig. 8 gezeigten Stellung in Richtung des Pfeiles Pf2 verschiebbar ist. Der Auslassraum 45 ist einerseits durch die Ringmembrane 42 und anderseits durch eine Verschlussmembrane 48 begrenzt. Die Verschlussmembrane 48 bildet dabei einen dichten Abschluss gegenüber einem Verstell- und Betätigungsmechanismus 49 für den Verschlusskörper 47.

Die Ringmembrane 42 sowie die Verschlussmembrane 48 sind an ihren Aussenrändern zwischen Gehäuseteilen des Armaturengehäuses 7a dicht eingespannt. Zwischen den Membranen 42, 48 befindet sich ein Distanzring 50, der im Bereich des Armaturen-Austrittes 51 eine seitliche Öffnung 52 aufweist. Die Dicke des Distanzringes 50 ist so bemessen, dass der Verschlusskörper 47 zwischen die Membranen passt und genügend Bewegungsmöglichkeit für eine Öffnungs- und Schliessbewegung hat.

Der Betätigungsmechanismus 49 weist eine Gewindespindel 53 auf, die mit der Verschlussmembrane 48 sowie dem Verschlusskörper 47 verbunden ist. Dazu weist die Gewindespindel 53 an ihrem der Verschlussmembrane 48 zugewandten Ende einen Druckteller 54 auf, der zentral einen die Verschlussmembrane 48 durchgreifenden Gewindebolzen 55 hat, dessen anderes Ende in den Verschlusskörper 47 eingeschraubt ist. Die Verschlussmembrane 48 ist somit in ihrem etwa zentralen Bereich zwischen dem Druckteller 54 und dem Verschlusskörper 47 eingespannt.

Die Gewindespindel 53 ist in einer Gewindehülse 56 höhenverstellbar gelagert. Die Gewindehülse 56 ist dazu ihrerseits verdrehbar in dem Armaturengehäuse 7a gelagert und in axialer Richtung entgegen dem Pfeil Pf2 durch einen Seitenflansch 57 festgelegt. Die Gewindehülse 56 weist ein Innenlinksgewinde auf, das mit der Gewindespindel 53 zusammenarbeitet. Die Gewindehülse 56 ist mit einem Handrad 58 verbunden, mit dem die Gewindehülse 56 verdreht und damit die Gewindespindel 53 höhenverstellt werden kann.

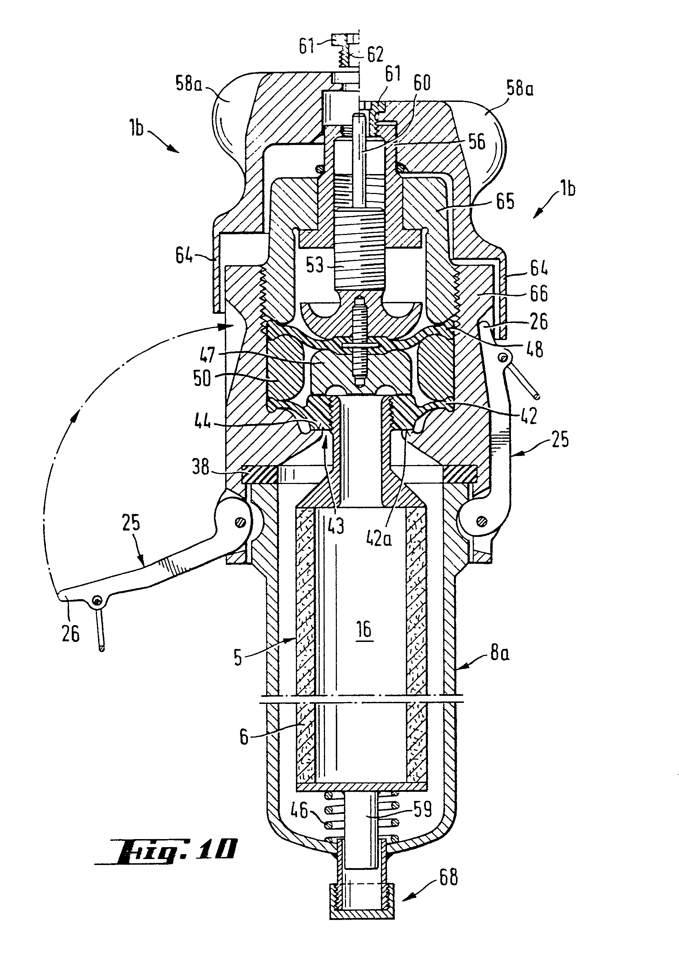

Zum Sperren der Armatur 1a wird der Verschlusskörper 47 durch die Spindel 53 zu der Ringmembrane 42 hin bewegt, bis er auf dieser aufliegt. Beim weiteren Verstellen der Gewindespindel wird die gesamte Filterkerze gegen den Federdruck der Feder 46 verschoben, wobei ein am unteren Ende vorgesehener Zentrierstift 59 für eine gute Seitenführung sorgt. In Schliessstellung (Fig. 9 und 10) liegt dann die Ringmembrane 42 mit ihrer dem Eintritt 43 zu dem Filter-Aussenraum 34 weisenden Seite auf diesem Eintritt 43 dichtend auf. Gleichzeitig wird der zentrale Eintritt der Ringmembrane 42 bzw. des Anschlussteiles 35a durch den Verschlusskörper 47 verschlossen.

Die Gewindespindel 53 ist an ihrer den Membranen abgewandten Seite mit einem Signal- und Sperrstift 60 versehen, der in Offenstellung (Fig. 8) eine zentrale Durchgangsbohrung 62 in einer Befestigungsschraube 61 zum Verbinden des Handrades 58 mit der Gewindehülse 56 durchgreift. Die Befestigungsschraube 61 weist an ihrem äusseren Ende einen Innensechskant od. dgl. Werkzeugangriffsstelle auf, der nur bei innenliegendem Signal- und Sperrstift zugänglich ist.

Das Handrad 58 kann nach dem Lösen der Schraube 61 von der Gewindehülse 56 abgenommen werden. Es werden dann durch das sonst von dem Handrad 58 verdeckte Befestigungsschrauben 63 zum Halten des Einbauteile-Gehäuses 8a zugänglich. Nach Lösen dieser Schrauben kann das Einbauteile-Gehäuse 8a für einen Filterwechsel od. dgl. abgenommen werden, wobei durch die Sicherungssperre sichergestellt ist, dass die Armatur 1a sich in Sperrstellung befindet. Ein unbeabsichtigtes Austreten von Flüssigkeit od. dgl. Medium bei abgenommenem Einbauteile-Gehäuse 8a wird dadurch sowohl vom Zu- als auch vom Ablauf her verhindert.

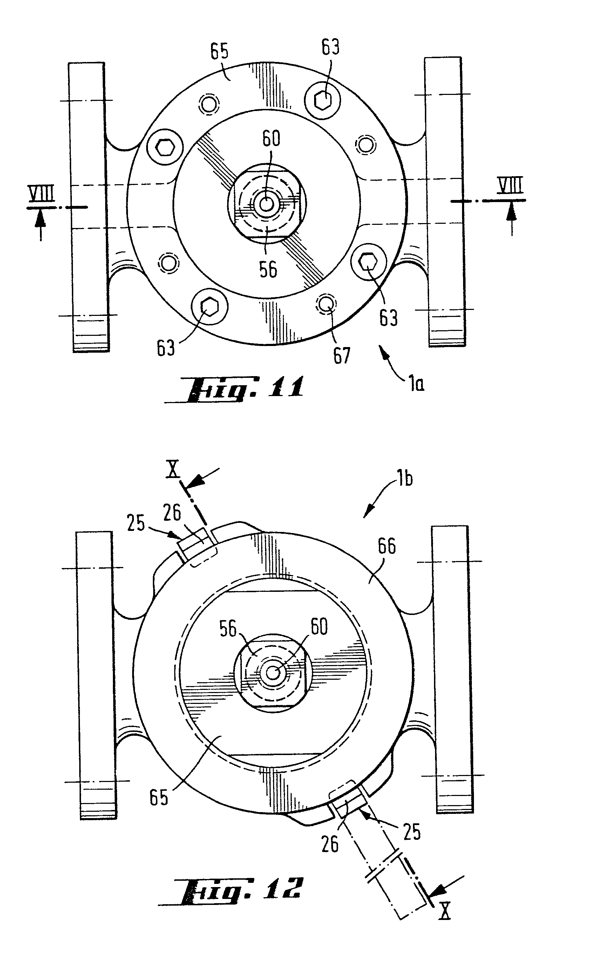

Fig. 11 zeigt eine Aufsicht dieser Armatur 1a bei abgenommenem Handrad 58, so dass dann die Befestigungsschrauben 63 zugänglich sind.

Eine abgewandelte Sicherungssperre zeigen die Fig. 10 und 12. Dabei sind etwa in Kombination der Ausführungsformen gemäss Fig. 2 und 8 Exzenter-Hebelverschlüsse 25 vorgesehen, deren freie Enden 26 in Sicherungsstellung (Fig. 10 rechte Seite) von einem Hemd 64 des Handrades 58a übergriffen werden. Ein Öffnen der Exzenter-Hebelverschlüsse 25 ist in dieser Stellung nicht möglich. Auch bei dieser Ausführungsform muss zunächst mit dem Handrad 58a die Gewindespindel 53 so weit verstellt werden, dass der Signal- und Sperrstift 60 die Befestigungsschraube 61 an ihrer Werkzeugangriffsstelle freigibt. In dieser Stellung befindet sich das Absperrorgan (Ringmembrane 42, Verschlusskörper 47) in Schliessstellung. Nach dem Abnehmen des Handrades 58a können die Exzenter-Hebelverschlüsse 25 abgeschwenkt werden, wie dies in Fig. 10 links gezeigt ist.

In Abwandlung zu dem Ausführungsbeispiel gemäss Fig. 8 ist bei der Ausführungsform nach Fig. 10 das Gehäuseoberteil 65 mit dem Gehäuseunterteil 66 direkt verschraubt, während gemäss Fig. 8 und 9 die beiden Gehäuseteile durchsetzende Schrauben 67 vorgesehen sind. Die in Fig. 10 gezeigte Armatur 1b ist in Fig. 12 in einer Draufsicht nochmals ohne Handrad 58a gezeigt. Zum Ablassen von innerhalb des Einbauteile-Gehäuses 8, 8a befindlicher Flüssigkeit vor dem Abnehmen dieses Gehäuses ist an dessen unterem Ende ein verschliessbarer Ablauf 68 vorgesehen.

Erwähnt sei noch, dass die Armatur 1, 1a, 1b auch ein zuverlässiges Absperren eines Rohrstranges, auch ohne die Absicht, das Einbauteil 5 zu wechseln, ermöglicht, d.h. dass sie auch als Absperrarmatur einsetzbar ist.

Die erfindungsgemässe Armatur 1, 1a, 1b bildet eine kompakte Einheit, durch die ein Einbau in einen Rohrstrang einfach durchführbar ist.

**Patentansprüche**

1. Armatur (1) mit einer Vorrichtung (4) zum Reinigen, Messen und/oder Untersuchen od. dgl. von einem durch eine Leitung (19) strömenden Medium mit einem die Vorrichtung (4) – z.B. ein Filter (6), insbesondere als Einbauteil (5) – auswechselbar enthaltenden, an die Rohrleitung (19) angeschlossenen Gehäuse (7), an dessen Ein- und Ausgang zu dem Einbauteil (5) ein den Ein- und Ausgang verschliessendes, im Rohrverlauf befindliches Absperrorgan (9) angeordnet ist, welches das Medium in Offenstellung durch die Vorrichtung (4) leitet und in Schliessstellung Ein- und Austritte der gesamten Armatur (1) und damit die Rohrleitung (19) selbst beidseits der Vorrichtung (4) sperrt, wobei das Absperrorgan (9) eine verstellbare Sperre enthält, die zwei voneinander getrennte Ein- und Austritte aufweist, wobei jeweils ein Eintritt und der zugehörige Austritt der Sperre die Rohrleitung (19) mit dem Einbauteil (5), insbesondere zwei verschiedene Seiten des Einbauteiles (5), verbindet und wobei die Sperre Dichtflächen und/oder Gegendichtungen im Armaturengehäuse aufweist, an denen sie zumindest in Schliessstellung jeweils anliegt, dadurch gekennzeichnet, dass als Sperre eine um eine quer zur Rohrleitung (19) liegende Achse drehbare Kugel (10) vorgesehen ist, an welcher von einem Eintritt (12) über eine Krümmung (14) ein Austritt (15) zu dem Einbauteil gerichtet ist, während über eine Zwischenwand (30) von diesem Austritt getrennt ein weiterer Eintritt (17) in die Kugel (10) vorgesehen ist, der getrennt von dem ersten Eintritt (12) zu einem weiteren Austritt (13) in der Kugelleitung führt, dass der von der Rohrleitung (33) kommende Eintritt (12) in die Kugel (10) mit deren Austritt (13) in die Rohrleitung fluchtet und dass Ein- und Austritt zu dem Einbauteil (5) etwa rechtwinklig und vorzugsweise in Fortsetzung zu einer Betätigungswelle (28) für die Kugel (10) liegen, wobei die eine Öffnung der Kugel (10) als Verbindung mit dem Einbauteil (5) etwa zentral angeordnet ist, während die andere Öffnung diese erste Öffnung ringförmig umgibt und wobei am Übergang zwischen Kugel (10) und dem diese enthaltenden Gehäuse Dichtringe (22) angeordnet sind.

2. Armatur nach Anspruch 1, dadurch gekennzeichnet, dass zum Schliessen der Armatur (1) die Kugel (10) um etwa 90° verdrehbar ist.

3. Armatur (1) mit einer Vorrichtung (4) zum Reinigen, Messen und/oder Untersuchen od.dgl. von einem durch eine Leitung (19) strömenden Medium mit einem die Vorrichtung (4) – z.B. ein Filter (6), insbesondere als Einbauteil (5) – auswechselbar enthaltenden, an die Rohrleitung (19) angeschlossenen Gehäuse (7), an dessen Ein- und Ausgang zu dem Einbauteil (5) ein den Ein- und Ausgang verschliessendes, im Rohrverlauf befindliches Absperrorgan (9) angeordnet ist, welches das Medium in Offenstellung durch die Vorrichtung (4) leitet und in Schliessstellung Ein- und Austritte der gesamten Armatur (1) und damit die Rohrleitung (19) selbst beidseits der Vorrichtung (4) sperrt, wobei das Absperrorgan (9) eine verstellbare Sperre enthält, die zwei voneinander getrennte Ein- und Austritte aufweist, wobei jeweils ein Eintritt und der zugehörige Austritt der Sperre die Rohrleitung (19) mit dem Einbauteil (5), insbesondere zwei verschiedene Seiten des Einbauteiles (5), verbindet und wobei die Sperre Dichtflächen und/oder Gegendichtungen im Armaturengehäuse aufweist, an denen sie zumindest in Schliessstellung jeweils anliegt, dadurch gekennzeichnet, dass als Sperre wenigstens eine Ringmembrane (42) mit einem Verschlusskörper (47) zusammenwirkt, wobei der Eintritt/Austritt in das Einbauteil (5) durch die Ringfläche (68) der von ihrem Sitz abgehobenen Ringmembrane (42) begrenzt ist und der Austritt/Eintritt der Innenöffnung der Membrane entspricht, und wobei in Schliessstellung die Ringfläche (68) der Membrane auf dem vorzugsweise ringwulstförmigen Eintritt (43) in die Vorrichtung (4) aufliegt, während der mittlere Durchgang durch den auf der anderen Seite auf der Ringfläche dichtend aufliegenden Verschlusskörper (47) versperrt ist.

4. Armatur nach Anspruch 3, dadurch gekennzeichnet, dass der Verschlusskörper (47) seinerseits unterhalb einer Verschlussmembrane (48) angeordnet ist, die eine Verstellspindel (53) und deren Betätigungsmechanismus gegenüber dem Durchflussweg des Mediums innerhalb des Armaturengehäuses (7, 7a) abdichtet.

5. Armatur nach einem der Ansprüche 1 bis 3, dadurch gekennzeichnet, dass das Gehäuse (8, 8a) od.dgl. für ein Einbauteil (5) lösbar oder öffenbar an dem Armaturengehäuse (7, 7a) befestigt und die Befestigungsvorrichtung bei geöffnetem Absperrorgan gegen Öffnen oder Lösen gesperrt ist.

6. Armatur nach Anspruch 5, dadurch gekennzeichnet, dass als Befestigungsvorrichtung Exzenter-Hebelverschlüsse (25) vorgesehen sind, deren freie Betätigungsenden (26) vorzugsweise in Schliessstellung am Armaturengehäuse (7) anliegen und wenigstens teilweise von einem Sperrbügel (27) od.dgl. Sperre gesperrt, insbesondere übergriffen sind, der mit dem Betätigungsgriff (41) od.dgl. des Absperrorganes drehfest verbunden ist und die Verschlüsse nur bei verschlossenem Absperrorgan freigibt.

7. Armatur nach einem der Ansprüche 3 bis 6, dadurch gekennzeichnet, dass die Spindel (53) zum Heben und Senken der Membrane(n) einen wenigstens eine Befestigungsschraube (61) des Handrades (58, 58a) an ihrem Ansatz für ein Werkzeug durchsetzenden Stift (60) od.dgl. aufweist, der den Werkzeugangriff nur bei geschlossener Sperre freigibt, und dass die Befestigungsschrauben (63) für das Gehäuse od.dgl. des Einbauteiles (5) unter dem Handrad (58) verdeckt angeordnet sind.

8. Armatur nach Anspruch 7, dadurch gekennzeichnet, dass die Befestigungsschraube(n) (61) des Handrades (58) als Imbusschraube(n) ausgebildet ist (sind).

9. Armatur nach einem der Ansprüche 1 bis 8, dadurch gekennzeichnet, dass bei einem Filter (6) als Einbauteil (5) dieses einen rohrförmigen Ansatz (32) od.dgl. aufweist, der in eine zentrale Öffnung der Sperre, entweder in die zentrale Öffnung (15) der Kugel (10) od.dgl. oder in den mittleren Durchtritt (43) der Ringmembrane (42), eingreift und dass gegebenenfalls der Ansatz (32) als zusätzliche Lagerung für die Kugel (10) od.dgl. dient.

10. Armatur nach einem der Ansprüche 1 bis 9, dadurch gekennzeichnet, dass in dem Armaturengehäuse (7, 7a) eine Gewindebuchse od.dgl. zum Halten des Filters od.dgl. Einbauteil an der Armatur selbst vorgesehen ist, welche Gewindebuchse einen ringförmigen, von Haltestegen (36) unterbrochenen Durchlass aufweist.

11. Armatur nach einem der Ansprüche 3 bis 10, dadurch gekennzeichnet, dass zwischen der Ringmembrane (42) und der Verschlussmembrane (48) ein Zwischenring (50) dichtend eingespannt ist, welcher im Bereich des Armaturenaustrittes eine Öffnung (52) aufweist und in seinem Inneren Platz für den auf- und abbewegbaren, gegen die Ringmembrane (42) anlegbaren Verschlusskörper (47) hat.

12. Armatur nach einem der Ansprüche 3 bis 11, dadurch gekennzeichnet, dass das Filter (6) od.dgl. mit der Ringmembrane (42) in Funktionsstellung verbunden ist und an ihrem anderen Ende längsverschiebbar und vorzugsweise federbelastet gelagert ist.

## Claims

1. A packing (1) in a device (4) for the purification, measurement and/or analysis or the like of a material passing through a conduit (19), comprising a housing (7) which contains the device (4) in a replaceable condition and is connected to the conduit (19), said device (4) being, for example, a filter (6) and, in particular, taking the form of a built-in member (5), there being disposed at the inlet and outlet of said housing to said built-in member (5) a shutoff device (9) which is located in the run of the conduit and closes the inlet and outlet, in the open position said shutoff device conducting the material through the device (4) and in the closed position shutting off the inlets and outlets of the entire packing (1) and hence the conduit (19) itself on either side of the device (4), the shutoff device (9) containing an adjustable locking device having two inlets and outlets separated from one another, in each case one inlet and the associated outlet of the locking device connecting the conduit (19) to the built-in member (5), in particular two different sides of the latter, the locking device having sealing faces and/or counter seals in the housing of the packing, against which the locking device rests at least in the closed position, characterized in that as the locking device there is provided a ball (10) rotatable about an axis lying at right angles to the conduit (19), at said ball there being an outlet (15) directed to the built-in member from an inlet (12) via a bend (14), provision being made separately from said outlet for a further inlet (17) into the ball (10) via a partition (30), said further inlet (17) leading to a further outlet (13) in the ball conduit separately from said first inlet (12), the inlet (12) into the ball (10) coming from conduit (33) being in alignment with the outlet (13) thereof into the conduit, the inlet and outlet to the built-in member (5) being approximately at right angles to and preferably in a continuous line with an actuating shaft (28) for the ball (10), the one opening of the ball (10) being approximately centrally disposed as the connection to the built-in member (5), while the other opening annularly surrounds said first opening, sealing rings (22) being disposed at the transition between the ball (10) and the housing containing the latter.

2. The packing as claimed in claim 1, characterized in that the ball (10) is adapted to be twisted through approximately 90° for closing the packing (1).

3. A packing (1) in a device (4) for the purification, measurement and/or analysis or the like of a material passing through a conduit (19), comprising a housing (7) which contains the device (4) in a replaceable condition and is connected to the conduit (19), said device (4) being, for example, a filter (6) and, in particular, taking the form of a built-in member (5), there being disposed at the inlet and outlet of said housing to said built-in member (5) a shutoff device (9) which is located in the run of the conduit and closes the inlet and outlet, in the open position said shutoff device conducting the material through the device (4) and in the closed position shutting off the inlets and outlets of the entire packing (1) and hence the conduit itself (19) on either side of the device (4), the shutoff device (9) containing an adjustable locking device having two inlets and outlets separated from one another, in each case one inlet and the associated outlet of the locking device connecting the conduit (19) to the built-in member (5), in particular two different sides of the latter, the locking device having sealing faces and/or counter seals in the housing of the packing, against which the locking device rests at least in the closed position, characterized in that as the locking device, at least one annular membrane (42) interacts with a closure member (47), the inlet/outlet into the built-in member (5) being defined by the annular face (68) of the annular membrane (42) lifted from its seat and the outlet/inlet corresponding to the inner opening of the membrane, and, in the closed position, the annular face (68) of the membrane resting upon the preferably torus-shaped inlet (43) into the device (4), while the middle passage is blocked by the closure member (47) sealingly resting upon the annular face on the other side.

4. The packing as claimed in claim 3, characterized in that the closure member (47) in turn is located underneath a closure membrane (48) which seals an adjusting spindle (53) and the actuating mechanism thereof against the flow path of the material inside the housing (7, 7a).

5. The packing as claimed in any one of claims 1 to 4, characterized in that the housing (8, 8a) or the like for a built-in member (5) is fastened in a releasable or openable manner to the housing (7, 7a) of the packing and the fastening means is locked against opening or releasing when the shutoff device is open.

6. The packing as claimed in claim 5, characterized in that as fastening means there are provided eccentric lever closures (25), the free actuating ends (26) thereof resting against the housing (7) of the packing preferably in the closed position and being at least partly locked, in particular enclasped, by a locking bracket (27) or similar locking means which is connected in a twist-proof manner to the actuating handle (41) or the like of the shutoff device and releases the closures only when the shutoff device is closed.

7. The packing as claimed in any one of claims 3 to 6, characterized in that the spindle (53) for lifting and lowering the membrane(s) has a pin (60) or the like traversing at least one fastening screw (61) of the handwheel (58, 58a) at said screw neck for a tool, said pin allowing tool application only when the locking means is closed, and that the fastening screws (63) for the housing or the like of the built-in member (5) are disposed in a concealed condition under the handwheel (58).

8. The packing as claimed in claim 7, characterized in that the fastening screw(s) (61) of the handwheel (58) take(s) the form of (a) hexagon head cap screw(s).

9. The packing is claimed in any one of claims 1 to 8, characterized in that when a filter (6) is the built-in member (5) it has a tubular attachment (32) or the like which engages into a central opening of the locking means, either into the central opening (15) of the ball (10) or the like or into the central passage (43) of the annular membrane (42) and that the attachment (32) may serve as an additional bearing for the ball (10) or the like.

10. The packing as claimed in any one of claims 1 to 9, characterized in that in the housing (7, 7a) of the packing there is provided a threaded bush or the like for holding the filter or a similar built-in member onto the packing itself, said threaded bush having an annular port interrupted by holding webs (36).

11. The packing as claimed in any one of claims 3 to 10, characterized in that an intermediate ring (50) is sealingly clamped between the annular membrane (42) and the closure membrane (48), said intermediate ring having in the region of the outlet from the packing an opening (52) and having in its interior room for the closure member (47) which is adapted to be moved up and down and to be laid against the annular membrane (42).

12. The packing as claimed in any one of claims 3 to 11, characterized in that the filter (6) or the like is connected to the annular membrane (42) in the operating position and at its other end is supported so as to be longitudinally displaceable and preferably spring-loaded.

**Revendications**

1. Appareil de robinetterie (1) muni d'un dispositif (4) pour l'épuration, la mesure et/ou l'examen, ou analogue d'un fluide s'écoulant à travers une conduite (19), et d'un corps (7) raccordé à la conduite (19), contenant de façon interchangeable le dispositif (4) – par exemple un filtre (6), en particulier en tant qu'élément encastré (5) – et à l'entrée et à la sortie duquel, vis-à-vis de l'élément encastré (5), est disposé un obturateur (9) situé sur le parcours de la conduite, fermant l'entrée et la sortie et qui, en position ouverte, conduit le fluide à travers le dispositif (4) et en position fermée, bouche les entrées et sorties de l'ensemble de l'appareil de robinetterie (1) et donc la conduite (19) elle-même, de part et d'autre du dispositif (4), l'obturateur (9) contenant un arrêt réglable qui présente deux entrées et sorties séparées l'une de l'autre, une entrée et la sortie adjointe de l'arrêt reliant chaque fois la conduite (19) à l'élément encastré (5), en particulier deux côtés différents de l'élément encastré (5) et l'arrêt présentant dans le corps de l'appareil de robinetterie des surfaces d'étanchéité et/ou contre-joints contre lesquels il s'applique chaque fois au moins en position fermée, caractérisé par le fait que comme arrêt est prévue une boule (10) pouvant tourner autour d'un axe placé transversalement à la conduite (19) et sur laquelle, depuis une entrée (12) en passant par une courbure (14), une sortie (15) est dirigée vers l'élément encastré, tandis qu'une entrée supplémentaire (17) de la boule (10), séparée de cette sortie par une paroi intermédiaire (30), est prévue et conduit séparément de la première entrée (12) à une autre sortie (13) du conduit de boule, que l'entrée (12) de la boule (10), venant de la conduite (19), est alignée sur la sortie (13) de la boule vers la conduite et que l'entrée et la sortie de l'élément encastré (5) sont placées à peu près perpendiculairement à un arbre d'actionnement (28) de la boule (10) et de préférence dans le prolongement de celui-ci, l'une des ouvertures de la boule (10), en tant que communication avec l'élément encastré (5), étant disposée à peu près au centre tandis que l'autre ouverture entoure annulairement cette première ouverture, des anneaux d'étanchéité (22) étant disposés à la transition entre la boule (10) et le corps qui contient celle-ci.

2. Appareil de robinetterie selon la revendication 1, caractérisé par le fait que pour la fermeture de l'appareil de robinetterie (1), on peut faire tourner la boule (10) par exemple de 90°.

3. Appareil de robinetterie (1) muni d'un dispositif (4) pour l'épuration, la mesure et/ou l'examen, ou analogue d'un fluide s'écoulant à travers une conduite (19), et d'un corps (7) raccordé à la conduite (19), contenant de façon interchangeable le dispositif (4) – par exemple un filtre (6), en particulier en tant qu'élément encastré (5) – et à l'entrée et à la sortie duquel, vis-à-vis de l'élément encastré (5), est disposé un obturateur (9) situé sur le parcours de la conduite, fermant l'entrée et la sortie et qui, en position ouverte, conduit le fluide à travers le dispositif (4), et en position fermée, bouche les entrées et sorties de l'ensemble de l'appareil de robinetterie (1) et donc la conduite (19) elle-même, de part et d'autre du dispositif (4), l'obturateur (9) contenant un arrêt réglable qui présente deux entrées et sorties séparées l'une de l'autre, une entrée et la sortie adjointe de l'arrêt reliant chaque fois la conduite (19) à l'élément encastré (5), en particulier deux côtés différents de l'élément encastré (5) et l'arrêt présentant dans le corps de l'appareil de robinetterie des surfaces d'étanchéité et/ou contre-joints contre lesquels il s'applique chaque fois au moins en position fermée, caractérisé par le fait que, comme arrêt, au moins une membrane annulaire (42) coopère avec un obturateur (47), l'entrée/sortie de l'élément encastré (5) étant limitée par la surface annulaire (68) de la membrane annulaire (42) écartée de son siège et l'entrée/sortie correspondant à l'ouverture intérieure de la membrane, et la surface annulaire (68) de la membrane étant appliquée, en position fermée, sur l'entrée (43), de préférence en forme de bourrelet annulaire, du dispositif (4), tandis que le passage central est barré par l'obturateur (47) s'appliquant de l'autre côté de façon étanche sur la surface annulaire.

4. Appareil de robinetterie selon la revendication 3, caractérisé par le fait que l'obturateur (47), de son côté, est disposé en dessous d'une membrane d'obturation (48) qui rend étanches une tige filetée de réglage (53) et son mécanisme d'actionnement, vis-à-vis du parcours d'écoulement du fluide à l'intérieur du corps (7, 7a) de l'appareil de robinetterie.

5. Appareil de robinetterie selon l'une des revendications 1 à 3, caractérisé par le fait que le corps (8, 8a) ou partie similaire destinée à un élément encastré (5) est fixé, de manière à pouvoir se détacher ou s'ouvrir, au corps (7, 7a) de l'appareil de robinetterie et que le dispositif de fixation est bloqué contre l'ouverture ou le détachement quand l'obturateur est ouvert.

6. Appareil de robinetterie selon la revendication 5, caractérisé par le fait que, comme dispositif de fixation sont prévus des verrouillages à excentrique et à levier (25) dont les extrémités libres d'actionnement (26) sont de préférence appliquées, en position fermée, contre le corps (7) de l'appareil de robinetterie et bloquées au moins partiellement en particulier recouvertes, par un étrier de blocage (27) ou arrêt similaire qui est relié de façon solidaire en rotation à la poignée d'actionnement (41) ou organe similaire de l'obturateur et libère seulement les verrouillages quand l'obturateur est fermé.

7. Appareil de robinetterie, selon l'une des revendications 3 à 6, caractérisé par le fait que la tige filetée (53) servant à lever et à abaisser la membrane peut présenter une broche (60) ou un organe similaire traversant au moins une vis de fixation (61) du volant à main (58, 58a), à son appendice et destinée à un outil et qui ne libère l'application de l'outil que lorsque l'arrêt est fermé et que les vis de fixation (63) du corps ou partie similaire de l'élément encastré (5) peuvent être disposées de façon dissimulée sous le volant à main (58).

8. Appareil de robinetterie selon la revendication 7, caractérisé par le fait que la ou les vis de fixation (61) du volant à main (58) sont conçues sous forme de vis à six pans creux.

9. Appareil de robinetterie selon l'une des revendications 1 à 8, caractérisé par le fait que dans le cas d'un filtre (6) comme élément encastré (5), celui-ci présente un appendice tubulaire (32) ou partie similaire qui s'engage dans une ouverture centrale (15) de la boule (10) ou organe similaire ou dans le passage central (43) de la membrane annulaire (42) et qu'éventuellement, l'appendice (32) sert de palier supplémentaire à la boule (10) ou organe similaire.

10. Appareil de robinetterie selon l'une des revendications 1 à 9, caractérisé par le fait que dans le corps (7, 7a) de l'appareil de robinetterie est prévue une douille filetée ou un élément similaire pour retenir le filtre ou élément encastré similaire sur l'appareil de robinetterie lui-même, cette douille filetée présentant un passage annulaire interrompu par des filets de retenue (36).

11. Appareil de robinetterie selon l'une des revendications 3 à 10, caractérisé par le fait qu'entre la membrane annulaire (42) et la membrane de fermeture (48) est enserré de façon étanche un anneau intermédiaire (50) qui présente, dans la région de la sortie de l'appareil de robinetterie, une ouverture (52) et présente intérieurement de la place pour l'obturateur (47) pouvant monter et descendre, pouvant s'appliquer contre la membrane annulaire (42).

12. Appareil de robinetterie, selon l'une des revendications 3 à 11, caractérisé par le fait que le filtre (6) ou élément similaire est relié en position de fonctionnement à la membrane annulaire (42) et qu'à son autre extrémité, il est monté de manière à pouvoir coulisser longitudinalement et de préférence sollicité par ressort.

**Fig. 1**

Fig. 2

*Fig. 3*

*Fig. 4*

Fig. 5

Fig. 6

Fig. 7

Fig. 8

Fig.9

_Fig. 10_

*Fig. 11*

*Fig. 12*